# EUROPEAN PATENT APPLICATION

(11) **EP 1 947 822 A1**
(43) Date of publication of application: **23.07.2008**
(21) Application number: 07300732.0
(22) Date of filing: 16.01.2007
(51) Int. Cl.: H04L 29/06, H04L 29/08

(54) **Method of establishing an internet protocol communication link and set top box**

(71) Applicant: Alcatel Lucent, 75008 Paris (FR)
(72) Inventor: Betge-Brezetz, Stephane, 75015, Paris (FR); Andrieu, Xavier, 91220, BRETIGNY SUR ORGE (FR); Pinault, Francis, 92270, BOIS-COLOMBES (FR)
(74) Representative: Schneider, Sandra

(57) **Abstract**

The present invention relates to a method of establishing and internet protocol communication link, the method comprising establishing a secure channel (60) from a set top box (STB) to an Internet server (IP PBX, ISP). The invention further relates to a set top box (STB) comprising means for establishing a virtual secure channel (60) over an internet protocol communication link (50) to a remote location and an Internet server (IP PBX, ISP) comprising means for establishing a secure channel (60) to a remote location over an Internet protocol communication link (50).

## Description

The present invention relates to a method of establishing secure channel, e. g. a virtual private network channel (VPN), over an Internet protocol communication link. The invention further relates to an Internet protocol private branch exchange for a variety of telephony services that are offered by Internet protocol private branch exchanges for Internet protocol telephony communications. An example for Internet protocol telephony is voice over IP but also facsimile communication or video conferencing services. The services offered by private branch exchanges or also Internet protocol private branch exchanges are for example call transfer voice mail, follow me services, call forwarding, conference call or/and also accounting services. These services can be used on the premises of the institution where the private branch exchange (PBX) or the Internet private branch exchange (IPPBX) is installed. The invention further relates to an Internet service provider, which is preferably able to provide a variety of Internet services to portable wireless devices.

Employees of a company for example can use the services of a private branch exchange or an Internet protocol private branch exchange that is installed on the company's premises. For employees of the company not working on the companies premises but for example at home a secure access method called virtual private network communications provides access to the company's local area network or data network. A virtual private network secure channel provides a secure communication from a computer to the data networks of the company.

In the Unites States Patent Application Publication US 2004/0260747 A1 a voice over Internet protocol telephone is described which has a built-in virtual private network client. The voice over Internet protocol telephone is able to build a virtual private network secure channel to an IP private branch exchange. The voice over IP telephone can be directly connected to the Internet and provides a secure channel using virtual private network communications. By connecting the voice over IP telephone to the Internet protocol private branch exchange at the company the employee at home can use the facilities and services of the Internet protocol private branch exchange at the company.

### Object of the invention

The object of this invention to provide a person within his or her home environment with the capability to advantageously use a set top box.

### SUMMARY OF THE INVENTION

This object is achieved by a method of establishing an Internet protocol communication link according to claim 1, a set top box according to claim 7 and an Internet server according to claim 12.

According to one aspect of the invention a secure channel is established from a set top box to an Internet protocol private branch exchange over an Internet protocol communication link. The secure channel is preferable a virtual private network secure channel, but other secured network connection technologies can be used as well, e. g. IPsec. The use of a secure channel allows for a person who is off premises to gain a secured access to an Internet server over the Internet. The Internet server is preferably an enterprise's Internet protocol private branch exchange. This also allows this person to use all the personal home devices connected to the set top box for example an HD TV, a HiFi device etc. to use it for accessing the company's private branch exchange and to use it for any Internet protocol telephony communication that is done.

According to another embodiment of the invention, the Internet server is an Internet Service Provider. A customer in the home environment uses for example a PDA for accessing the resources and applications offered by the Internet Service Provider. The customer in the home environment uses the set top box in his/her home environment for the access to the Internet service provider. Services provided by the Internet service provider can then be presented on the PDA and also using for example the TV for images or promotional videos.

Another aspect of the invention is to make use of a regular set top box with Internet protocol capabilities in the home environment to be connected to the Internet server at a remote location. Internet access is provided to devices locally connected to the set top box. Said local connection can be a wired or a wireless connection. Said access is provided using the Internet protocol communication link in between the set top box and a remote location, e. g. an Internet server like an Internet protocol private branch exchange or Internet service provider. The set top box comprises means for providing Internet access to devices locally connected to the set top box.

According to another embodiment of the invention, the method provides access to functions of the set top box to the devices locally connected to the set top box. The set top box comprises means for providing for the devices locally connected to the set top box. Said access to the set top box comprises access to functions of the set top box. Such functions of the set top box could be for example multimedia presentation or alerting, interactive gaming on Home TV system etc.

According to a preferred embodiment of the invention a Internet protocol telephony communication is established over the Internet protocol communication line using a secure channel, e. g. a virtual private network secure channel. Said Internet protocol telephony communication is established in between one or more devices connected to the set top box and an Internet server, e. g. an Internet protocol private branch exchange in a company or an Internet service provider, on the other end. The devices connected to the set top box can be for example a HiFi audio system a TV set an Internet protocol phone which e.g. a voice over IP phone or a cellular smart phone with WiFi or Bluetooth capabilities. An Internet protocol telephony communication comprises for example a voice over IP communication a facsimile communication or videoconferencing communication.

By allowing to establish the secure channel, e. g. VPN, in between an Internet server and a set top box all different devices that can be connected to the set top box can be included in the Internet protocol telephony communication as well. Communication is no longer limited to the devices that are directly connected over the secure channel. For example, all the private branch exchange services of the company can be accessed in the home environment. A video conference can be launched using the TV set the web cam a fix mobile phone or any device that is connected to the set top box to have a high quality video conference system. A personal video recorder function of the set top box can advantageously be used to store a video conference or part of the video conference or to share and show video with video conference papers. A large TV screen can be used for collaborative business tools e.g. my team work. The TV screen can be also used to implement a pop up feature with personalized and prioritized windows that pop up according to personal settings. This can for example used for different enterprise notifications with possibly different priorities for different persons in the household.

According to an embodiment of the invention, the Internet server can an Internet service provider, which is for example a server with application software connected to the network Internet. An Internet service provider can for example be a travel agency which transmits advertisements to portable devices. Customers receive promotions and their portable device, e. g. a Personal Digital Assistant (PDA), can be wirelessly, e. g. over wifi, connected to the set top box. The advertisements can then be presented by using the TV for images and the promotional video. The presentation on the TV or any other device connected to the set top box can then be made in addition to or instead of the presentation on the portable device.

According to another embodiment of the invention a regular IP set top box in the home environment is connected to the Internet server, e. g. the IP PBX of the enterprise or the Internet service provider, using a secure network client, e. g. a virtual private network client, in the set top box. In the Internet server a secure network server, e. g. a virtual private network server, is used. The secure channel, e. g. a virtual private network channel, is established in between the secure network client and the secure network server. Secure Internet access can then be provided to devices locally connected to the set top box. Said local connection can be a wired or wireless connection. Said access is provided using the secure channel from the set top box to the Internet server connected to the set top box over the Internet protocol communication link.

According to a further embodiment of the invention the secure network client, e. g. virtual private network client, is comprised in a proxy module in the set top box. This proxy module uses the resources of the set top box for example the hardware resources like CPU, memory driver and also software resources such as the TV pop up capability. The TV pop up capability can for example be used to notify users that a planned video conference is starting or will be starting shortly.

Said proxy module (120) preferably comprises means to provide Internet access to devices locally connected to the set top box. Said local connection can be a wired or a wireless connection. Said access is provided using the secure channel from the set top box to the Internet server connected to the set top box over the Internet protocol communication link.

According to a preferred embodiment of the invention the proxy module can be downloaded to the set top box over an Internet protocol communication link. Advantageously the proxy module is downloaded to the set top box from the Internet server, e. g. the Internet protocol private branch exchange or the Internet service provider.

In a further preferred embodiment of the invention of the invention the proxy module is stored in the Internet server, e. g. the Internet protocol private branch exchange or the Internet service provider. It can be downloaded from the Internet protocol private branch exchange to remote locations e.g. set top boxes at different remote locations. This solution allows nomadism as the proxy module can be downloaded to various set top boxes at different remote locations e.g. different employees' homes.

In a preferred embodiment of the invention the proxy module also comprises a resource management module. The resource management module is able to adapt the quality of service parameters for communication over the Internet protocol communication link. The resource management module also ensures stream adaptations between the home devices and the Internet protocol private branch exchange. In such a system the user can access transparently to all his business environment e.g. IP PBX services and business services of the IP PBX platform using his personal home devices or Internet services provided by Internet service providers. Moreover the system can support the renegotiation of data flow e.g. using the real time transport protocol. This is especially advantageous for the usage of HiFi or a high definition television environment using codecs. The resource management module performs an effective distribution of the multimedia streams between the domestic appliances e.g. high definition television, HiFi audio systems to provide an enhanced service e. g. for a high quality video conference. The resource management module also allows to renegotiate the data flow when for example using the real time transport protocol with the usage of e.g. HiFi or high definition television environments. This can also be called codecs renegotiation.

In another embodiment of the invention the proxy module also comprises an IP PBX stub which allows to retrieve all the features and functions of the IP PBX.

The invention provides the possibility to a user to use his personal electronic home environment which is connected to a set top box advantageously to securely connect to an Internet server, e. g. PBX, at a remote location. A set top box is for example connected to a TV set a HiFi device the Internet and other sources of signal and other output devices. Signal sources might be connected to the set top box by an Ethernet cable, satellite dish, a coaxial cable, a telephone line including DSL connections or ordinary VHF or UHF antenna. Contents treated in a set top box could be any or all of video, audio, Internet web pages, interactive games or other multimedia contents. The contents can for example be displayed on TV set connected to the set top box or on the display of a computer connected to the set top box. Often a set top box contains a decoding module for decoding received coded signals. This is for example used for pay TV. A set top box can also offer wireless connectivity for example using infrared or radio for example Bluetooth or WiFi signals.

The invention provides the possibility to access to services provided by the Internet private branch exchange at a remote location, e. g. at a home worker's company, using said personal electronic home environment around a set top box. For instance the user at home is able to access to the IP PBX services at home with his home phone or to launch a video conference using his TV his web cam and/or his fix or mobile phones for example WiFi based. He is also able to launch a videoconference using even his HiFi device for audio signals to have a high quality video conference system. Another examples of use are the displaying of the enterprise directory on the TV or the use of the TV remote control to launch a call.

The invention also provides the possibility to use the personal video recorder functionality of the set top box to store a video conference or some parts of it or to share and show video with video conferencing peers. The invention also provides the possibility to use the large television screen for example an ADTV screen for business tools by sharing contents on a display.

The invention can also optionally provide an mechanism to allow management of priority between classical home environment usage, for example TV games, camera viewer, on one side and enterprise features on the other side.

According to a preferred embodiment of the invention, it allows multiple enterprise notifications and priority definitions for example for a pop up feature on the television. This pop up feature can be personalized prioritized for example for different levels for different persons in the household.

Moreover, the invention also allows to offer new business services that mix both the set top box and home devices capabilities and the IP-PBX features. For instance, the notification of an important business topic on the TV with an alerting pop-up. This pop-up preferably be interactive. The pop-up can be an urgent message and preferably includes a button so that the user can trigger directly to respond to a call with his/her TV remote control. Another example is the displaying of the enterprise directory on the TV and the use of the TV remote control to launch a call.

Of course, the invention allows for connections in between the set top box and the same or different kinds of Internet servers. These connections can also exist at the same time.

### Brief description of the drawings

Other characteristics and advantages of the invention will become apparent in the following detailed description of preferred embodiments of the invention illustrated by the accompanying drawings given by way of non limiting illustrations. The same reference numerals may be used in different figures of the drawings to identify the same or similar elements.
- Figure 1: shows an overview of an Internet protocol communication system,
- Figure 2: shows a schematic overview of set top box connected devices to the set top box and private branch exchange,
- Figure 3: shows a schematic overview of the software architecture of a set top box.

### Detailed description of the invention

A set top box is connected over an Internet protocol communication link 50 to an Internet protocol private branch exchange IP PBX and/or Internet service provider ISP. Over the Internet protocol communication link 50 a virtual private network secure channel 60 is established in between the Internet protocol private branch exchange IP PBX and the set top box STB. Over the Internet protocol communication link 50 a virtual private network secure channel 60 is established in between the Internet service provider ISP and the set top box STB. Connected to the set top box STB are different devices 10, 20, 30 and 40. examples for such devices are a voice over IP telephone 10, a television 20, a HiFi audio system 30, or a device connected to the set top box over a wired link or portable device 40, e. g. a smart phone or portable digital assistant PDA, connected to the set top box STB over a wireless link, e. g. a WiFi link. A portable device, e. g. PDA, may be connected to the set top box by either a wired or wireless link. This system provides the possibility to establish an Internet protocol telephony communication between the Internet protocol private branch exchange and one or more devices 10, 20, 30 , 40 connected to the set top box STB. In particular it enables establishing a voice over Internet protocol VoIP connection between a voice over Internet protocol telephone 10 connected to the set top box STB and the Internet protocol private branch exchange IP PBX. This system also provides the possibility to establish an Internet protocol communication between the Internet server and one or more devices 10, 20, 30, 40 connected to the set top box STB.

In general, the invention provides the possibility to extend the Internet connection to devices 10, 20, 30, 40 connected to the set top box. It enables to have at the same time a connection between the Internet server ISP or IP PBX and devices 10, 20, 30, 40 connected to the set top box STB, for example a PDA or PC with for example WiFi link. This connection is established with the secure channel between the set top box STB and Internet server IP-PBX or ISP to allow the connection between the device 10, 20, 30 or 40 and Internet server IP-PBX or ISP.

It is therefore possible to use at the same time the set top boxes' STB functionalities while using an Internet connection. This enables the extension of some local functions of the set top box STB such as multimedia projection, interactive menu, messaging pop up. This extension is provided to devices 10, 20, 30, 40 connected to the set top box which can at the same time use the Internet.

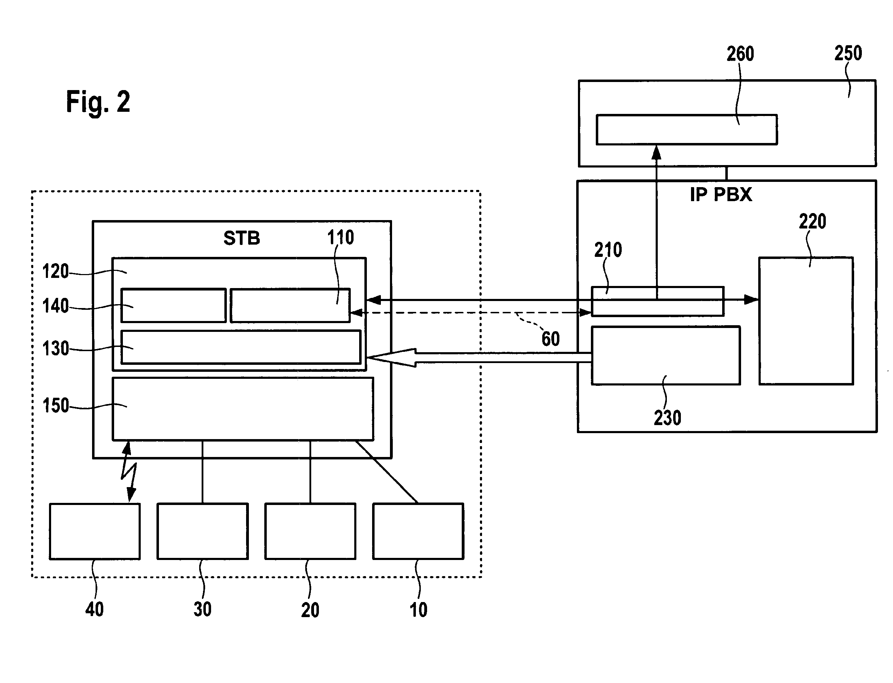

Figure 2 shows an overview of the hardware and software architecture of the STB and the IP PBX. The IP PBX platform 250 provides platform services 260. The IP PBX platform is for example a computer on which the IP PBX runs. Platform services 260 are then services close to the hardware that are provided to the IP PBX. A hardware and software architecture of an Internet service provider ISP is built analogously.

The IP PBX comprises a module 220 which provides the usual PBX services like call establishment, conference and so on. The IP PBX also comprises the virtual private network server 210. The set top box home office administration module 230 is the administration tool of the proxy module 120. The set top box home office administration module 230 is advantageously located in the IP PBX and is used to download the proxy module 120 to the set top box STB. In an alternative embodiment of the invention the proxy module 120 can be loaded on a portable storage module like a smart card and be loaded to the set top box STB by inserting the portable storage module into the set top box STB. This can for example be done by loading the proxy module 120 on a smart card which is later inserted in a slot in the set top box STB to download the proxy module 120 onto the set top box STB. The proxy module can also be downloaded from the Internet, e.g. from the enterprise web site.

The set top box STB comprises the proxy module 120 which comprises the virtual private network client 110 the resource management module 130 and the optional IP PBX stub 140. The proxy module 120 also comprises means to establish an Internet connection in between the Internet communication link 50 and devices 10, 20, 30, 40 locally connected to the set top box STB.

The set top box STB also comprises hardware and software resources 150. The hardware resources comprise for example CPU memory drivers, hard disc input/output interfaces etc. Software resources comprise for example TV pop up software modules. Over its input and output interfaces the set top box STB provides connectivity in a wired or wireless fashion.

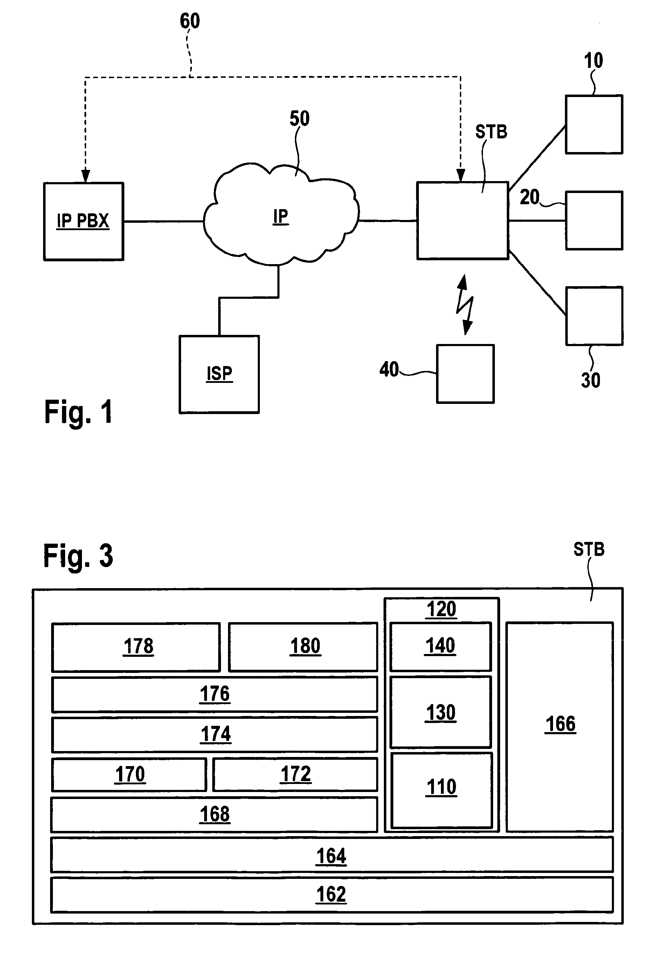

Figure 3 shows a schematic overview over the set top box STB software architecture. The set top box STB comprises the proxy module 120 which comprises the virtual private network client 110 the resource management module 130 and the IP PBX stub module 140. The set top box STB software also comprises an operating system 162 and device drivers 164. The software of the set top box STB also comprises input and output management software 168, the file manager software 170, transport software 172. Middleware software 174, multimedia application user interface software 1 76 are also comprised in the software of the set top box STB. The upper layer of the software architecture of the set top box STB comprises the resident applications 178 and the downloaded applications 180. A module 166, comprising an application manager and a loader, is also part of the software of the set top box STB.

It can be seen in Fig. 3 that the proxy module 120 is located in a layer above the device drivers' layer 164 of the software architecture of the set top box STB. The proxy module 120 comprises three internal modules. The three modules comprised in the proxy module 120 are the virtual private network client 110, the resource management module 130, and the IP PPX stub module 140. These modules 110, 130 and 140 are also in a layered architecture, the virtual private network VPN client 110 being in the lowest layer just above the device drivers 164. The resource management module 130 is in the layer above the virtual private network client 110 and the IP PPX stop module 140 is in the layer above the resource management module 130.

The described invention offers a cost effective solution for a home office environment with access to the PBX at a remote location, e. g. the PBX of an enterprise. The solution is cost effective as it can be based mainly on software. It is also based on consumer electronics devices which are connected to the set top box STB and no additional specific hardware or devices are required. It is also easy to employ a highly secured connection, due to the use of the virtual private network secure channel.

According to a preferred embodiment of the invention, the IP PBX proxy is downloaded to the set top box STB. This is especially secure if the download is done using a portable storage medium which is inserted into a storage medium slot at the set top box STB to charge the proxy module onto the set top box STB.

The invention also offers the benefit to use high quality consumer equipment like high definition television or HIFI audio systems for business usage. This enables higher quality business use with no extra devices necessary. The solution also allows nomadism as the proxy module 120 can be downloaded to various set top boxes STB at various different locations.

The proxy module 120 can be adapted to run on different set top box STB hardware and software configurations and to run on different set top box STB operating systems.

The further advantage of the invention is that the consumer devices connected to the set top box STB can be shared by users for office and entertainment usages.

## Claims

1. Method of establishing an Internet protocol communication link (50), the method comprising
establishing a secure channel (60) from a set top box (STB) to an Internet server (IP PBX, ISP) connected to the set top box (STB) over the Internet protocol communication link (50).

2. Method according to claim 1, **characterized by**
the server (IP PBX, ISP) being an Internet protocol private branch exchange (IP PBX) or an Internet Service Provider (ISP).

3. Method according to one of the claims 1 or 2, whereas
Internet access is provided to devices (10, 20, 30, 40) connected to the set top box (STB), said access being provided using the Internet protocol communication link (50).

4. Method according to claim 1 or 2, the method comprising
establishing said secure channel (60) between a secure network client (110) in said set top box (STB) and a secure network server (210) in said Internet server (IP PBX, ISP).

5. Method according to claim 4, whereas
said secure network client (110) is comprised in a proxy module (120) in said set top box (STB).

6. Method according to claim 5, further comprising the step of downloading said proxy module (120) from the Internet server (IP PBX, ISP) to the set top box (STB) prior to the establishment of said secure channel (60).

7. Method according to claim 5 or 6, whereas
said proxy module (120) further comprises a resource management module (130), said resource management module (130) adapting quality of service parameters for communication over said Internet protocol communication link (50).

8. Method according to one of the claims 1 to 7, whereas
Internet access is provided to devices (10, 20, 30, 40) connected to the set top box (STB), said access being provided using the secure channel (60) from the set top box (STB) to the Internet server (IP PBX, ISP) connected to the set top box (STB) over the Internet protocol communication link (50).

9. Method according to one of the claims 3 or 8, whereas
access to functions of the set top box (STB) is provided to the devices (10, 20, 30, 40) connected to the set top box (STB).

10. Set top box (STB) comprising means for establishing a secure channel (60) over an Internet protocol communication link (50) to a remote location.

11. Set top box (STB) according to claim 10, comprising means for providing Internet access to devices (10, 20, 30, 40) connected to the set top box (STB), said access being provided using the Internet protocol communication link (50).

12. Set top box (STB) according to claim 10, comprising
a secure network client (110) for establishing said secure channel (60) over said Internet protocol communication link (50).

13. Set top box (STB) according to claim 12, comprising
a proxy module (120) comprising said secure network client (110).

14. Set top box (STB) according to claim 13, being adapted to
download said proxy module (120) from said remote location over said Internet protocol communication link (50) prior to the establishment of said secure channel (60).

15. Set top box (STB) according to claim 13 or 14, said proxy module (120) further comprising a resource management module (130), said resource management module (130) being capable of adapting quality of service parameters for communication over said Internet protocol communication link (50).

16. Set top box (STB) according to one of the claims 13 to 15, said proxy module (120) comprising means to provide Internet access to devices (10, 20, 30, 40) connected to the set top box (STB), said access being provided using the secure channel (60) from the set top box (STB) to the Internet server (IP PBX, ISP) connected to the set top box (STB) over the Internet protocol communication link (50).

17. Set top box (STB) according to one of the claims 11 or 16, comprising means for providing access to the set top box (STB) for the devices (10, 20, 30, 40) connected to the set top box (STB), said access to the set top box (STB) comprising access to functions of the set top box (STB).

18. Internet server (IP PBX, ISP), comprising means for establishing a secure channel (60) to a remote location over an Internet protocol communication link (50).

19. Internet server (IP PBX, ISP) according to claim 18, comprising
a secure network server (210) for establishing said secure channel (60) over said Internet protocol communication link (50).

20. Internet server (IP PBX, ISP) according to claim 18 or 19, comprising means for transmitting over said Internet protocol communication link (50) a proxy module (120) comprising a secure network client (110) to said remote location prior to the establishment of said secure channel (60).

21. Internet server (IP PBX, ISP) according to claim 20, whereas
said proxy module (120) further comprises a resource management module (130), said resource management module (130) being capable of adapting quality of service parameters for communication over said Internet protocol communication link (50).

22. Internet server according to one of the claims 18 to 21, whereas
said Internet server is an Internet protocol private branch exchange (IP PBX) or an Internet Service Provider (ISP).
